# EUROPEAN PATENT APPLICATION

(11) **EP 4 635 595 A1**
(43) Date of publication of application: **22.10.2025**
(21) Application number: 25170783.2
(22) Date of filing: 15.04.2025
(51) Int. Cl.: B01D 29/11, B01D 35/30

(54) **MOUNTING COMPONENTS FOR A POWERPLANT FLUID SYSTEM**

(30) Priority: 15.04.2024 US 202418635743
(71) Applicant: PRATT & WHITNEY CANADA CORP., Longueuil, Québec J4G 1A1 (CA)
(72) Inventor: DUBOIS-PELLERIN, Guillaume, (01BE5) Longueuil, J4G 1A1 (CA); PELLERIN, Hugues, (01BE5) Longueuil, J4G 1A1 (CA)
(74) Representative: Dehns

(57) **Abstract**

An apparatus is provided for a powerplant. This powerplant apparatus includes a fluid filter assembly (24) with a filter housing (52). The filter housing (52) extends axially along an axis (32) between a housing first end (58) and a housing second end (60). The filter housing (52) includes a mount (64) and a sidewall (68). The mount (64) is connected to the sidewall (68). The mount (64) includes a flange (78), an attachment (80) and a pilot (82). The flange (78) projects radially out from the sidewall (68) and the attachment (80) to a flange distal outer end (84). The attachment (80) extends axially between the flange (78) and the pilot (82). The attachment (80) is configured with an external threaded section (92). The pilot (82) projects axially out from the attachment (80) to the housing first end (58). The pilot (82) includes a cylindrical external surface (106) located radially inboard of the external threaded section (92). An axial length of the pilot (82) is greater than an axial length of the attachment (80).

## Description

### TECHNICAL FIELD

This disclosure relates generally to a powerplant and, more particularly, to a fluid system for the powerplant.

### BACKGROUND INFORMATION

A powerplant such as a gas turbine engine includes various fluid systems such as a lubrication system, a cooling system and a fuel system. Such fluid systems may include a filter for filtering the fluid flowing through the respective fluid system. Various arrangements are known in the art for mounting a filter to another component of the powerplant. While these known filter mounting arrangements have various benefits, there is still room in the art for improvement.

### SUMMARY

According to an aspect of the present disclosure, an apparatus is provided for a powerplant. This powerplant apparatus includes a fluid filter assembly, and the fluid filter assembly includes a filter housing and a filter element disposed in an internal cavity of the filter housing. The filter housing extends axially along an axis between a housing first end and a housing second end. The filter housing includes a mount and a sidewall. The mount is connected to the sidewall. The mount includes a flange, an attachment and a pilot. The flange projects radially out from the sidewall and the attachment to a flange distal outer end. The attachment extends axially between the flange and the pilot. The attachment is configured with an external threaded section. The pilot projects axially out from the attachment to the housing first end. The pilot includes a cylindrical external surface located radially inboard of the external threaded section. An axial length of the pilot is greater than an axial length of the attachment.

According to another aspect of the present disclosure, another apparatus is provided for a powerplant. This powerplant apparatus includes a fluid filter assembly, and the fluid filter assembly includes a filter element and a filter housing. The filter element is arranged within an internal cavity of the filter housing and axially recessed from a housing open end along an axis. The filter housing extends axially between the housing open end and a housing closed end. The filter housing includes a mount and a sidewall. The mount is connected to the sidewall. The mount includes a flange, an attachment and a pilot. The flange projects radially out to a flange distal outer end located radially outboard from the sidewall and the attachment. The attachment extends axially between the flange and the pilot. The attachment is configured with an external threaded section. The pilot projects axially out from the attachment to the housing open end. The pilot includes a cylindrical external surface located radially inboard of the external threaded section.

According to still another aspect of the present disclosure, another apparatus is provided for a powerplant. This powerplant apparatus includes a first component and a second component. The first component extends axially along an axis to a component first end. The first component includes an internal cavity, a mount and a sidewall. The internal cavity projects axially into the first component from the component first end. The mount is connected to the sidewall. The mount includes a flange, an attachment and a pilot. The flange projects radially out from the sidewall and the attachment to a flange distal outer end. The attachment extends axially between the flange and the pilot. The attachment is configured with an external threaded section. The pilot projects axially out from the attachment to the component first end. The pilot includes a cylindrical external surface located radially inboard of the external threaded section. The second component includes a first aperture, a second aperture, an internal threaded section and a cylindrical internal surface. The first aperture projects axially into the second component from a side of the second component, along the internal threaded section, to the second aperture. The second aperture projects axially within the second component out from the first aperture along the cylindrical internal surface. The flange is abutted axially against the side of the second component. The external threaded section is mated with the internal threaded section to attach the first component to the second component. The cylindrical internal surface axially overlaps the cylindrical external surface. A gap extends radially between the cylindrical internal surface and the cylindrical external surface. A ratio of an axial length of the pilot to a radial height of the gap is greater than a ratio of an axial length of the attachment to an internal thread play between the external threaded section and the internal threaded section.

The first component may be configured as or otherwise include a fluid filter housing.

The axial length of the pilot may be equal to or greater than one and one-half times the axial length of the attachment.

The axial length of the pilot may be between one and one-quarter times the axial length of the attachment and two times the axial length of the attachment.

An axial length of the cylindrical external surface may be greater than an axial length of the external threaded section.

An axial length of the mount may be less than a diameter of the internal cavity of the filter housing where the diameter of the internal cavity of the filter housing is measured at a location axially along the mount.

An axial length of the mount may be less than an axial length of the sidewall.

The filter element may be disposed completely within the internal cavity of the filter housing.

The mount may axially overlap and may be spaced radially outboard from the filter element.

The filter housing may also include an endwall connected to the sidewall at the second housing end. The internal cavity of the filter housing may project axially into the filter housing from the housing first end, along the mount and the sidewall, to the endwall.

The filter housing may also include a wrenching feature configured with the endwall.

The filter housing may also include a wrenching feature configured with the flange.

The filter element may be configured as or otherwise include a tubular filter element.

The housing first end may be an open end of the filter housing. The housing second end may be a closed end of the filter housing.

The powerplant apparatus may also include a powerplant component. The powerplant component may include a first aperture, a second aperture, an internal threaded section and a cylindrical internal surface. The first aperture may project axially into the powerplant component from a side of the powerplant component, along the internal threaded section, to the second aperture. The second aperture may project axially within powerplant component out from the first aperture along the cylindrical internal surface. The flange may be abutted axially against the side of the powerplant component. The external threaded section may be mated with the internal threaded section to secure the filter housing to the powerplant component. The cylindrical internal surface may axially overlap and may be radially next to the cylindrical external surface.

The first aperture may be configured as or otherwise include a counterbore. The second aperture may be configured as or otherwise include a bore.

The first aperture may be configured as or otherwise include a bore. The second aperture may be configured as or otherwise include an annular slot.

A gap may extend radially between the cylindrical internal surface and the cylindrical external surface. A ratio of the axial length of the pilot to a radial height of the gap may be greater than a ratio of the axial length of the attachment to an internal thread play between the external threaded section and the internal threaded section.

A gap may extend radially between the cylindrical internal surface and the cylindrical external surface. A radial height of the gap may be less than an internal thread play between the external threaded section and the internal threaded section.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side sectional illustration of a fluid system with a powerplant component and a fluid filter assembly.
FIG. 2 is a partial side sectional illustration of the powerplant component.
FIG. 3 is a partial side sectional illustration of the fluid filter assembly.
FIG. 4 is another partial side sectional illustration of the fluid system.
FIG. 5 is a partial side sectional illustration of the fluid system at a threaded interface.
FIG. 6 is a partial side sectional illustration of the fluid system with another powerplant component configuration.
FIG. 7 is a perspective illustration of a filter housing with one or more wrenching features.
FIG. 8 is a partial side sectional illustration of the fluid system with an alternative axial engagement.
FIG. 9 is a schematic illustration of cross-threading between internal and external threads.

### DETAILED DESCRIPTION

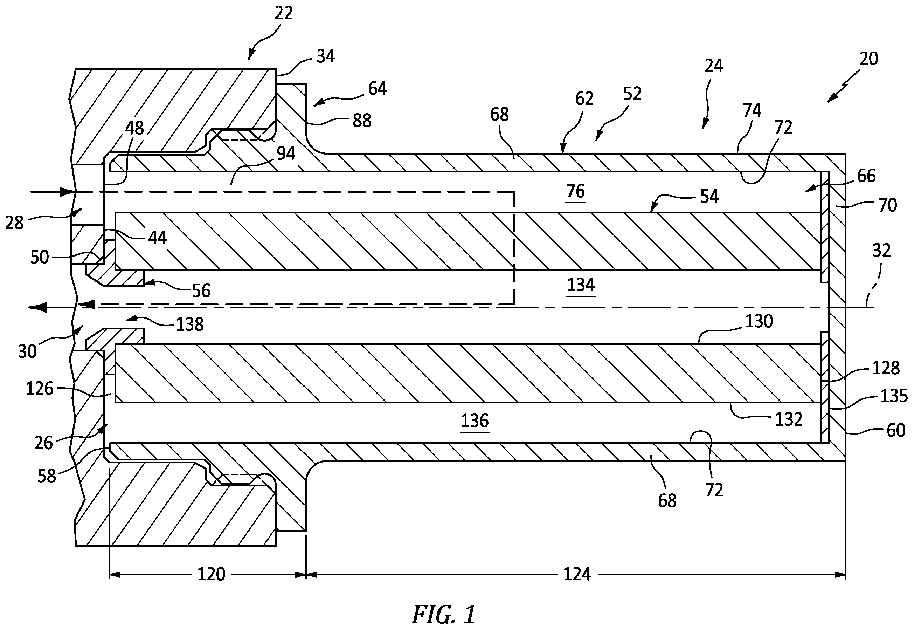

FIG. 1 partially illustrates a fluid system 20 for a powerplant of an aircraft. The aircraft may be an airplane, a helicopter, a drone (e.g., an unmanned aerial vehicle (UAV)) or any other manned or unmanned aerial vehicle or system. The powerplant may be configured as, or otherwise included as part of, a propulsion system for the aircraft. The powerplant, for example, may be a turbofan engine, a turbojet engine, a turboprop engine, a turboshaft engine, a rotary engine (e.g., a Wankel engine), a reciprocating piston engine, or any other type of combustion engine configured to generate thrust and/or drive rotation of a ducted or open propulsor rotor configured to generate thrust. The powerplant may alternatively (or also) be configured as, or otherwise included as part of, a power generation system for the aircraft. The powerplant, for example, may be an auxiliary power unit (APU) or any other type of combustion engine configured to mechanically power operation of an electrical generator. The present disclosure, however, is not limited to such exemplary combustion engine powerplants. The fluid system 20 of the present disclosure, for example, may also be used with an electric machine, a hybrid-electric power unit, or any other type of powerplant. Moreover, it is contemplated the powerplant may be configured for non-aircraft applications.

The fluid system 20 may be configured as, or otherwise included as part of, a lubricant system for the powerplant, a cooling system for the powerplant and/or a fuel system for the powerplant. The fluid system 20 of FIG. 1 includes a component 22 of the powerplant and a fluid filter assembly 24.

The powerplant component 22 may be configured as a housing for one or more other components of the powerplant. The powerplant component 22, for example, may be a gearbox case, an engine case or an engine block. The powerplant component 22 may alternatively be configured as a stationary structure for structurally mounting the fluid filter assembly 24 to another component of the powerplant. The powerplant component 22, for example, may be a filter assembly mounting structure. The present disclosure, however, is not limited to the foregoing exemplary powerplant component configurations.

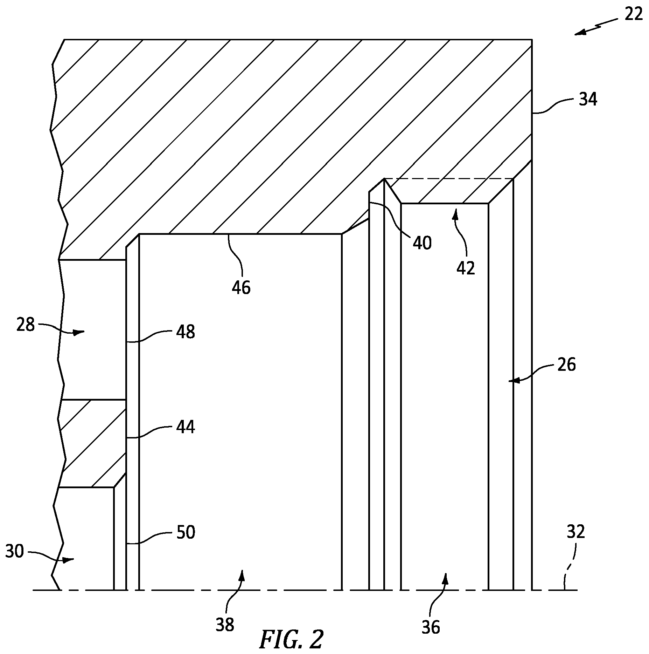

Referring to FIG. 2, the powerplant component 22 is configured with a filter assembly receptacle 26, a fluid inlet passage 28 and a fluid outlet passage 30. The powerplant component 22 of FIG. 2 extends axially along an axis 32 to an external side 34 of the powerplant component 22. Briefly, the axis 32 may be a centerline axis of the assembly receptacle 26. The assembly receptacle 26 of FIG. 2 includes a first receptacle aperture 36 and a second receptacle aperture 38.

The first receptacle aperture 36 may be configured as a counterbore. The first receptacle aperture 36 of FIG. 2, for example, projects axially along the axis 32 into the powerplant component 22 from the component external side 34 to the second receptacle aperture 38. More particularly, the first receptacle aperture 36 of FIG. 2 projects axially into the powerplant component 22 to an annular receptacle shelf 40 at an axial intersection between the first receptacle aperture 36 and the second receptacle aperture 38. The first receptacle aperture 36 projects radially out from the axis 32 to a radial outer peripheral boundary of the first receptacle aperture 36. This outer peripheral boundary of the first receptacle aperture 36 is at least partially or completely formed by an internal (e.g., radial inward facing) threaded section 42 (schematically shown) of the powerplant component 22. The internal threaded section 42 includes an internal thread which spirals around the axis 32. The internal threaded section 42 thereby extends axially along and circumscribes the assembly receptacle 26 and its first receptacle aperture 36.

The second receptacle aperture 38 may be configured as a bore. The second receptacle aperture 38 of FIG. 2, for example, projects axially along the axis 32 within the powerplant component 22 from the first receptacle aperture 36 to an axial end 44 of the assembly receptacle 26. More particularly, the second receptacle aperture 38 of FIG. 2 extends axially from the aperture intersection / the receptacle shelf 40 to the receptacle end 44. The second receptacle aperture 38 projects radially out from the axis 32 to a radial outer peripheral boundary of the second receptacle aperture 38. This outer peripheral boundary of the second receptacle aperture 38 is at least partially or completely formed by a cylindrical internal (e.g., radial inward facing) surface 46 of the powerplant component 22. The component internal surface 46 extends axially along and circumscribes the assembly receptacle 26 and its second receptacle aperture 38. The component internal surface 46 is also spaced radially inboard from the internal threaded section 42 by the receptacle shelf 40, which receptacle shelf 40 extends radially out from (or about) the component internal surface 46 to (or about) the internal threaded section 42.

The inlet passage 28 may be non-coaxial with the assembly receptacle 26, at least at a location where the inlet passage 28 is fluidly coupled to the assembly receptacle 26. The inlet passage 28 of FIG. 2, for example, is disposed to a lateral side of the assembly receptacle 26 and its second receptacle aperture 38, for example next to and slightly radially inboard from the component internal surface 46. The inlet passage 28 extends in the powerplant component 22 to an inlet orifice 48 in the receptacle end 44. The inlet passage 28 is thereby fluidly coupled with the assembly receptacle 26 and its second receptacle aperture 38.

The outlet passage 30 may be coaxial with the assembly receptacle 26, at least at a location where the outlet passage 30 is fluidly coupled to the assembly receptacle 26. The outlet passage 30 of FIG. 2, for example, extends in the powerplant component 22 to an outlet orifice 50 in the receptacle end 44 that is coaxial with the assembly receptacle 26 and its second receptacle aperture 38. Here, the inlet orifice 48 is spaced radially outward from the outlet orifice 50 towards the component internal surface 46. The outlet passage 30 is thereby fluidly coupled with the assembly receptacle 26 and its second receptacle aperture 38.

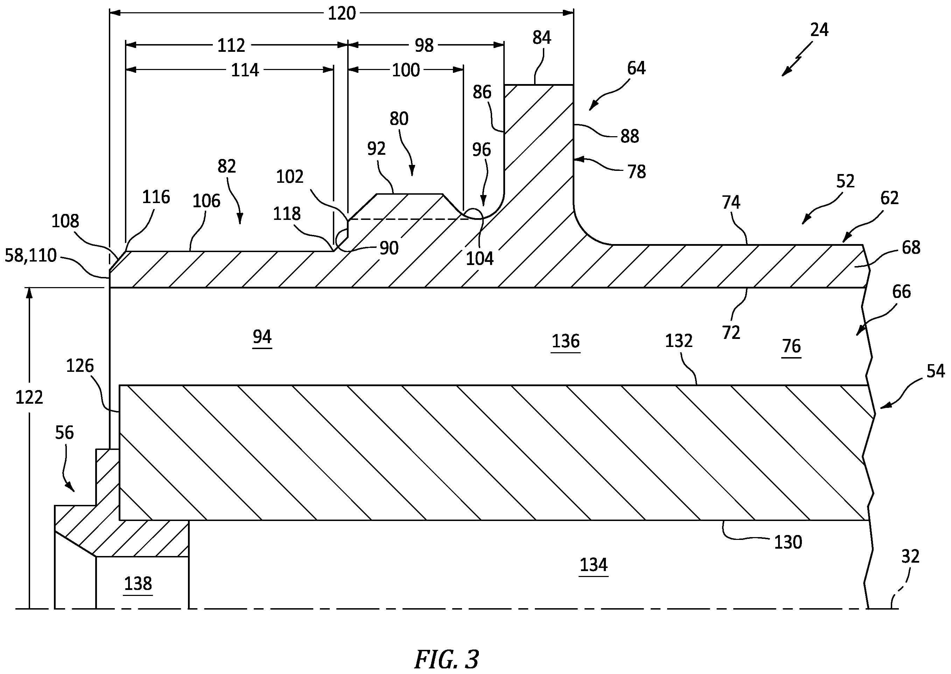

Referring to FIG. 3, the fluid filter assembly 24 may be configured as a lubricant filter assembly, a coolant filter assembly and/or a fuel filter assembly. The fluid filter assembly 24 includes a fluid filter housing 52 (e.g., a filter cover, a filter bowl, etc.) and a fluid filter element 54. The fluid filter assembly 24 of FIG. 3 also includes a filter element coupler 56; e.g., a filter element sleeve. Briefly, the axis 32 may be a centerline axis of the fluid filter assembly 24 and/or any one or all of its members 52, 54 and 56.

Referring to FIG. 1, the filter housing 52 extends axially along the axis 32 from a first end 58 of the filter housing 52 to a second end 60 of the filter housing 52. The housing first end 58 may be an open end of the filter housing 52. The housing second end 60 may be a closed end of the filter housing 52. The filter housing 52 of FIG. 1, for example, includes a housing base 62 and a housing mount 64. The filter housing 52 of FIG. 1 also includes an internal cavity 66; e.g., a bore. This internal cavity 66 projects axially along the axis 32 into the filter housing 52 from the housing first end 58, through the housing mount 64, and (e.g., partially) into the housing base 62 towards (e.g., but not to) the housing second end 60.

The housing base 62 of FIG. 1 includes a housing sidewall 68 and a housing endwall 70. The housing sidewall 68 is arranged axially between and is connected to (e.g., formed integral with) the housing mount 64 and the housing endwall 70. The housing sidewall 68 of FIG. 1, for example, extends axially along the axis 32 from the housing mount 64 to the housing endwall 70 (or to the housing second end 60). The housing sidewall 68 extends radially from a radial inner side 72 of the filter housing 52 to a radial outer side 74 of the housing base 62. The housing sidewall 68 extends circumferentially about (e.g., completely around) the axis 32 providing the housing sidewall 68 with, for example, a full-hoop (e.g., tubular) geometry. With this arrangement, the housing sidewall 68 forms a radial outer peripheral boundary of an interior portion 76 of the internal cavity 66 at the housing inner side 72. This interior portion 76 of the internal cavity 66 projects axially into the housing base 62 to the housing endwall 70.

The housing endwall 70 is disposed at the housing second end 60. The housing endwall 70 projects radially out from the axis 32 to the base outer side 74 (or to the housing sidewall 68). The housing endwall 70 extends circumferentially about (e.g., completely around) the axis 32 providing the housing endwall 70 with, for example, a full disk-like geometry. With this arrangement, the housing endwall 70 of FIG. 1 caps of / closes off the internal cavity 66 at the housing second end 60.

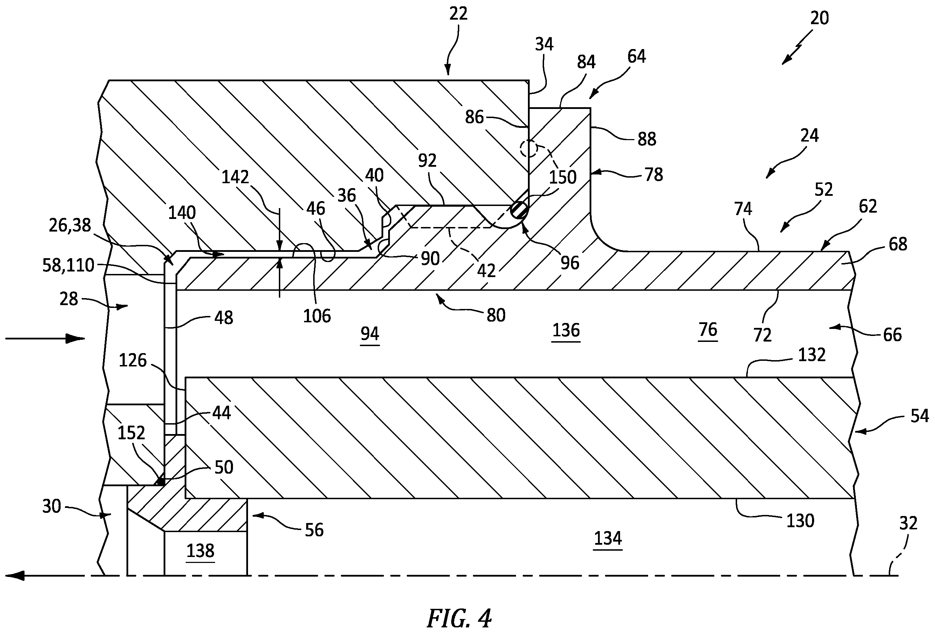

Referring to FIG. 4, the housing mount 64 is configured to removably attach, fix and/or otherwise secure the fluid filter assembly 24 and its filter housing 52 (or just the filter housing 52) to the powerplant component 22 as described below in further detail. The housing mount 64 of FIG. 3 includes a mount flange 78, a mount attachment 80 and a mount pilot 82.

The mount flange 78 is arranged axially between and is connected to (e.g., formed integral with) the housing sidewall 68 and the mount attachment 80. The mount flange 78 of FIG. 3, for example, projects radially out from (in a radial outward direction away from the axis 32) the housing sidewall 68 and the mount attachment 80 to a distal outer end 84 of the mount flange 78. The mount flange 78 extends axially along the axis 32 between opposing sides 86 and 88 of the mount flange 78. The flange first side 86 projects radially out from the mount attachment 80 to the flange distal outer end 84. The flange second side 88 projects radially out from the housing sidewall 68 to the flange distal outer end 84. The mount flange 78 extends circumferentially about (e.g., completely around) the axis 32 providing the mount flange 78 with, for example, a full-hoop (e.g., annular) geometry.

The mount attachment 80 is arranged axially between and is connected to (e.g., formed integral with) the mount flange 78 and the mount pilot 82. The mount attachment 80 of FIG. 3, for example, extends axially along the axis 32 out from the mount flange 78 to the mount pilot 82. More particularly, the mount attachment 80 of FIG. 3 extends axially from the flange first side 86 to an annular mount shelf 90 at an axial intersection between the mount pilot 82 and the mount attachment 80. The mount attachment 80 extends radially from the housing inner side 72 to a radial outer peripheral boundary of the mount attachment 80. The mount attachment 80 extends circumferentially about (e.g., completely around) the axis 32 providing the mount attachment 80 with, for example, a full-hoop (e.g., tubular or annular) geometry. The outer peripheral boundary of the mount attachment 80 is at least partially or completely formed by an external (e.g., radial outward facing) threaded section 92 (schematically shown) of the housing mount 64 and its mount attachment 80. This external threaded section 92 includes an external thread which spirals around the axis 32. The external threaded section 92 thereby extends axially along and circumscribes an end portion 94 of the internal cavity 66 which projects axially through the housing mount 64 to the interior portion 76 of the internal cavity 66.

The mount attachment 80 of FIG. 3 also includes an attachment groove 96. This attachment groove 96 projects partially radially into the housing mount 64 and its mount attachment 80 (in a radial inward direction towards the axis 32). The attachment groove 96 extends axially along the axis 32 within the housing mount 64 between the external threaded section 92 and the mount flange 78 and its flange first side 86. The attachment groove 96 extends within the housing mount 64 and its mount attachment 80 circumferentially about (e.g., completely around) the axis 32 providing the attachment groove 96 with, for example, a full-hoop (e.g., annular) geometry.

The mount attachment 80 has an axial length 98 along the axis 32. The mount attachment length 98 of FIG. 3 extends from (a) the mount flange 78 and its flange first side 86 to (b) the mount pilot 82 / the mount shelf 90. The external threaded section 92 also has an axial length 100 along the axis 32. The external threaded section length 100 of FIG. 3 extends between opposing axial ends 102 and 104 of the external threaded section 92. Here, the first axial end 102 of the external threaded section 92 is axially aligned with (or may be slightly axially recessed towards the mount flange 78 from) the mount shelf 90. The second axial end 104 of the external threaded section 92 is located at the attachment groove 96. With this arrangement, the external threaded section length 100 is less than the mount attachment length 98. The mount attachment length 98, for example, may be between one and one-tenth times (1.1x) and one and one-half times (1.5x) the external threaded section length 100. The present disclosure, however, is not limited to such an exemplary dimensional relationship. For example, where the attachment groove 96 receives a seal element / packing material, the ratio between the mount attachment length 98 and the external threaded section length 100 may be adjusted. The ratio between the mount attachment length 98 and the external threaded section length 100 may further be adjusted based on a specific thread size of threads in the external threaded section 92.

The mount pilot 82 is arranged axially between the housing first end 58 and the mount attachment 80. The mount pilot 82 is also connected to (e.g., formed integral with) the mount attachment 80. The mount pilot 82 of FIG. 3, for example, projects axially along the axis 32 out from the mount attachment 80 to the housing first end 58. The mount pilot 82 extends radially from the housing inner side 72 to a radial outer peripheral boundary of the mount pilot 82. The mount pilot 82 extends circumferentially about (e.g., completely around) the axis 32 providing the mount pilot 82 with, for example, a full-hoop (e.g., tubular) geometry. The outer peripheral boundary of the mount pilot 82 is at least partially or completely formed by a cylindrical external (e.g., radial outward facing) surface 106 of the housing mount 64 and its mount pilot 82. This pilot external surface 106 thereby extends axially along and circumscribes the mount pilot 82 and the end portion 94 of the internal cavity 66.

The pilot external surface 106 is spaced radially inboard from the external threaded section 92. The mount shelf 90 of FIG. 3, for example, projects radially out from (or about) the pilot external surface 106 to (or about) the external threaded section 92. The pilot external surface 106 may also be (e.g., slightly) axially spaced from the housing first end 58. For example, an outside corner between the housing first end 58 and the outer peripheral boundary of the mount pilot 82 may be chamfered, rounded or otherwise eased. In FIG. 3, a chamfered surface 108 (e.g., a frustoconical surface) extends between and is contiguous with the pilot external surface 106 and an annular distal end surface 110 of the mount pilot 82 at the housing first end 58. The present disclosure, however, is not limited to such an exemplary corner arrangement.

The mount pilot 82 has an axial length 112 along the axis 32; note, this axial length does not include any chamfering of the mount pilot 82 at the housing first end 58. The mount pilot length 112 of FIG. 3 extends from (a) the mount attachment 80 / the mount shelf 90 to (b) a first axial end 116 of the pilot external surface 106. The pilot external surface 106 also has an axial length 114 along the axis 32. The pilot external surface length 114 of FIG. 3 extends between opposing axial ends 116 and 118 of the pilot external surface 106. Here, the first axial end 116 of the pilot external surface 106 is located at an intersection between the pilot external surface 106 and the chamfered surface 108 at the housing first end 58. The second axial end 118 of the pilot external surface 106 is axially aligned with (or may be slightly axially recessed towards the housing first end 58 from) the mount shelf 90. With this arrangement, the pilot external surface length 114 is less than the mount pilot length 112. The mount pilot length 112, for example, may be between one and five-hundredths times (1.05x) and one and two-tenths (1.2x) the pilot external surface length 114. The present disclosure, however, is not limited to such an exemplary dimensional relationship.

The mount pilot length 112 of FIG. 3 is sized larger than the mount attachment length 98 and the external threaded section length 100. Similarly, the pilot external surface length 114 is also sized larger than the mount attachment length 98 and the pilot external threaded section length 100. The mount pilot length 112 and/or the pilot external surface length 114, for example, may each be between one and one-quarter times (1.25x) and two times (2x) the mount attachment length 98 and/or the external threaded section length 100. For example, the mount pilot length 112 and/or the pilot external surface length 114 may be equal to or greater than one and one-half times (1.5x) the mount attachment length 98 and/or the external threaded section length 100. Such an arrangement facilitates mating the filter housing 52 and its housing mount 64 with the powerplant component 22 and its assembly receptacle 26 (see FIG. 4) as described below in further detail. In one exemplary embodiment, the pilot external surface 106 may be operable to contact the component internal surface 46 (see FIG. 4) at the first axial end 116 about one-half inch (1/2 in) prior to threading of the external threaded section 92 into the internal threaded section 42 (see FIG. 4). It is contemplated, however, the foregoing dimensional relationships may be (e.g., slightly) increased or decreased depending on the specific filter housing design; e.g., thread type, thread pitch, filter housing diameter, etc. For example, the ratio between the mount pilot length 112 and the external threaded section length 100 may decrease as the external threaded section 92 includes larger threads.

The housing mount 64 has an axial length 120 along the axis 32. This housing mount length 120 of FIG. 3 extends from (a) the flange second side 88 to (b) the distal end surface 110 of the mount pilot 82 / the housing first end 58. The housing mount length 120 of FIG. 3 may be between one and one-tenth times (1.1x) and one and three-tenths times (1.3x) a sum of the mount pilot length 112 and the mount attachment length 98. The housing mount length 120 of FIG. 3, however, may be less than two times (2x) a radius 122 (e.g., a diameter) of the internal cavity 66; e.g., at a location axially along the housing mount 64 and any one or more of its mount members 78, 80 and/or 82. In FIG. 3, the internal cavity radius 122 is measured from the axis 32 to the housing inner side 72. Referring to FIG. 1, the housing mount length 120 is also less than an axial length 124 of the housing base 62 and its housing sidewall 68. The housing sidewall length 124 of FIG. 1, for example, may be between two times (2x) and five times (5x), or between five times (5x) and ten times (10x), the housing mount length 120. The present disclosure, however, is not limited to such an exemplary dimensional relationship.

The filter element 54 of FIG. 1 extends axially along the axis 32 between opposing axial ends 126 and 128 of the filter element 54. The filter element 54 extends radially from a radial inner side 130 of the filter element 54 to a radial outer side 132 of the filter element 54. The filter element 54 extends circumferentially about (e.g., completely around) the axis 32 providing the filter element 54 with, for example, a full-hoop (e.g., tubular) geometry. The filter element 54 of FIG. 1 thereby has an internal bore 134 which extends axially along the axis 32 through (or into) the filter element 54 between the opposing axial ends 126 and 128 of the filter element 54. This filter element 54 may be constructed from a porous and/or perforated filter material. Various types of filter materials are known in the art, and the present disclosure is not limited to any particular ones thereof.

Following installation of the fluid filter assembly 24 with the powerplant component 22, the filter element 54 is arranged with the filter housing 52. The filter element 54 of FIG. 1, for example, is disposed in the filter housing 52 and its internal cavity 66. More particularly, the filter element 54 is arranged (e.g., completely) within the internal cavity 66 where the filter first end 126 is (e.g., slightly) axially recessed into the internal cavity 66 from the housing first end 58. The filter element 54 is engaged with the filter housing 52 at the filter second end 128 through, for example, a spacer 135, a seal element or the like. The filter second end 128, for example, may be axially abutted against the spacer 135 and the spacer 135 may be abutted against the housing endwall. The spacer 135 may thereby provide a sealed interface between the filter element 54 and the filter housing 52. Of course, other arrangements / engagements between the filter element 54 is engaged with the filter housing 52 are contemplated. The filter outer side 132 is spaced radially inward from the housing inner side 72 to form an annular sub-cavity 136 radially between the filter element 54 and the filter housing 52. This annular sub-cavity 136 is fluidly coupled to the filter bore 134 radially through the porous and/or perforated filter material of the filter element 54. The annular sub-cavity 136 is also fluidly coupled with the inlet passage 28 through the inlet orifice 48. The filter element 54 is also engaged with the powerplant component 22 at the filter first end 126. The element coupler 56, for example, projects axially into the filter bore 134 at the filter first end 126 and projects into the outlet passage 30 through the outlet orifice 50. The element coupler 56 may be fixed (e.g., brazed) to the filter element 54. Alternatively, the element coupler 56 may be removably coupled to the filter element 54. The element coupler 56 may be axially abutted against and/or otherwise sealingly engaged with the receptacle end 44. A bore 138 axially through the element coupler 56 may thereby fluidly couple the filter bore 134 to the outlet passage 30. Of course, it is contemplated the filter element 54 may alternatively directly engage the powerplant component 22.

Referring to FIG. 4, the mount pilot 82 is mated with the assembly receptacle 26 and its second receptacle aperture 38. The mount pilot 82 of FIG. 4, for example, projects axially into the second receptacle aperture 38. The component internal surface 46 thereby axially overlaps and is disposed radially next to the pilot external surface 106. Here, the component internal surface 46 is spaced (e.g., slightly) radially outboard from the pilot external surface 106 by an annular gap 140. This gap 140 has a radial height 142 measured from the pilot external surface 106 to the component internal surface 46.

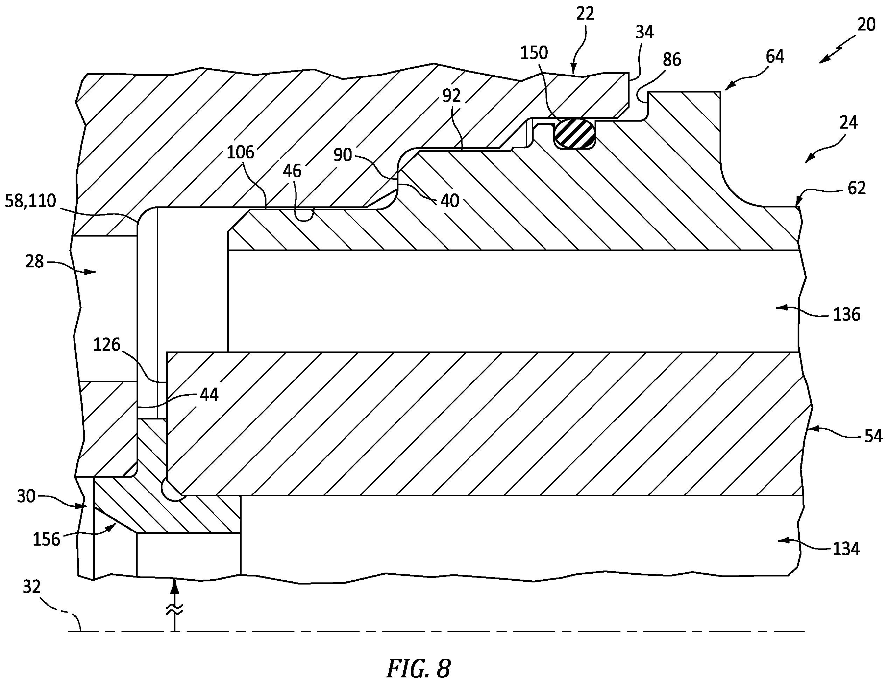

The mount attachment 80 is mated with the assembly receptacle 26 and its first receptacle aperture 36. The external threaded section 92 of FIG. 4, for example, is mated with (e.g., threaded into) the internal threaded section 42 to secure the filter housing 52 to the powerplant component 22. To facilitate this threaded attachment, the mount flange 78 is abutted axially against the powerplant component 22 at its component external side 34. By contrast, the mount shelf 90 is axially disengaged from the receptacle shelf 40 by an axial gap. In other embodiments however, referring to FIG. 8, it is contemplated the mount shelf 90 may alternatively axially abut against the powerplant component 22 at its receptacle shelf 40. By contrast, the mount flange 78 may be axially disengaged from the powerplant component 22 at its component external side 34 by an axial gap.

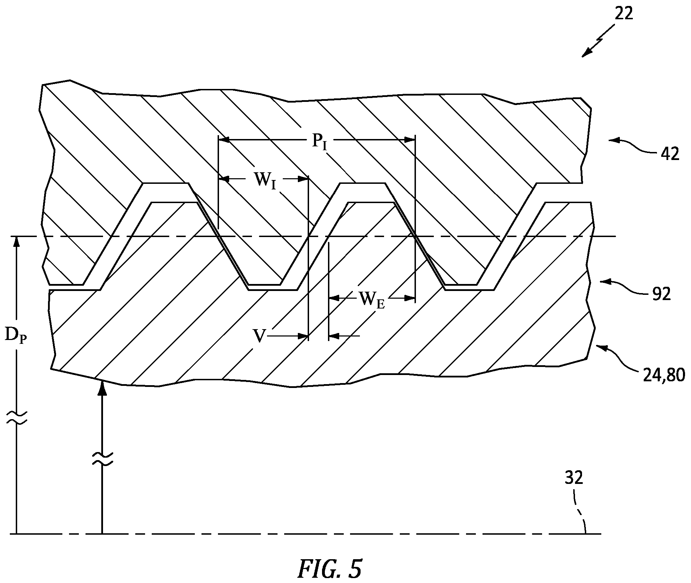

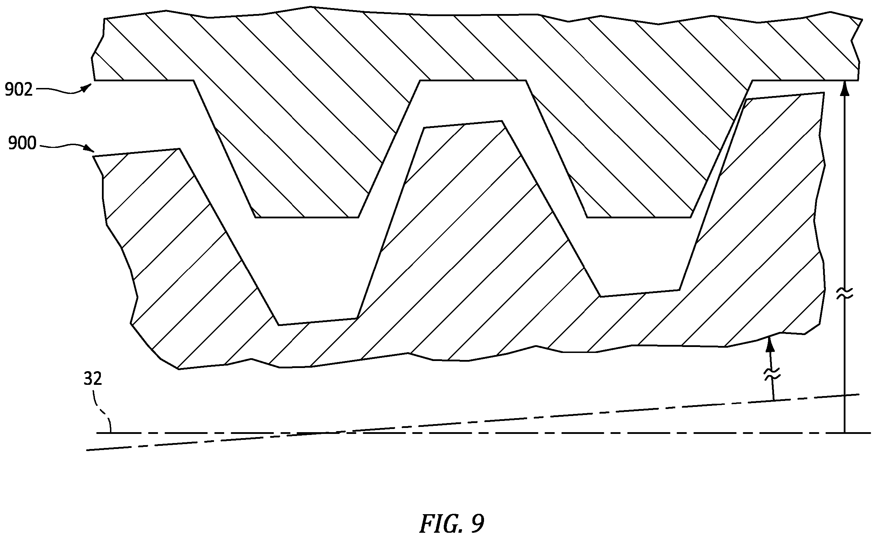

Referring again to FIG. 4, during the installation of the fluid filter assembly 24 with the powerplant component 22, the mount pilot 82 is inserted into the second receptacle aperture 38 prior to the mount attachment 80 being inserted into the assembly receptacle 26 and its first receptacle aperture 36. The pilot external surface 106 may thereby slide axially along the component internal surface 46 as the mount attachment 80 is inserted into the first receptacle aperture 36 and the external threaded section 92 is threaded into the internal threaded section 42. The mount pilot 82 may thereby center the housing mount 64 within the assembly receptacle 26 to prevent, for example, cross-threading (e.g., see schematic cross-threading between internal threads 900 and external threads 902 FIG. 9) between the external threaded section 92 and the internal threaded section 42. To facilitate this cross-thread free installation, a ratio of the mount pilot length 112 (see FIG. 3) to the gap height 142 is greater than a ratio of the mount attachment length 98 (see FIG. 3) to an internal thread play between the external threaded section 92 and the internal threaded section 42. Referring to FIG. 5, the internal thread play may be measured as V, , where V is equal to thread pitch P_{I} minus a thread tooth width W_{I} and a second thread tooth width W_{E} (P_{I}-W_{I}- W_{E}) for the internal threaded section 42, and where W_{E} is a thread tooth width for the external threaded section 92. Here, the thread pitch P_{I}, thread tooth width W_{I}, the thread tooth width W_{E}, and the internal thread play V may be measured at a pitch diameter D_{P}. The gap height 142 may also or alternatively be less than the internal thread play.

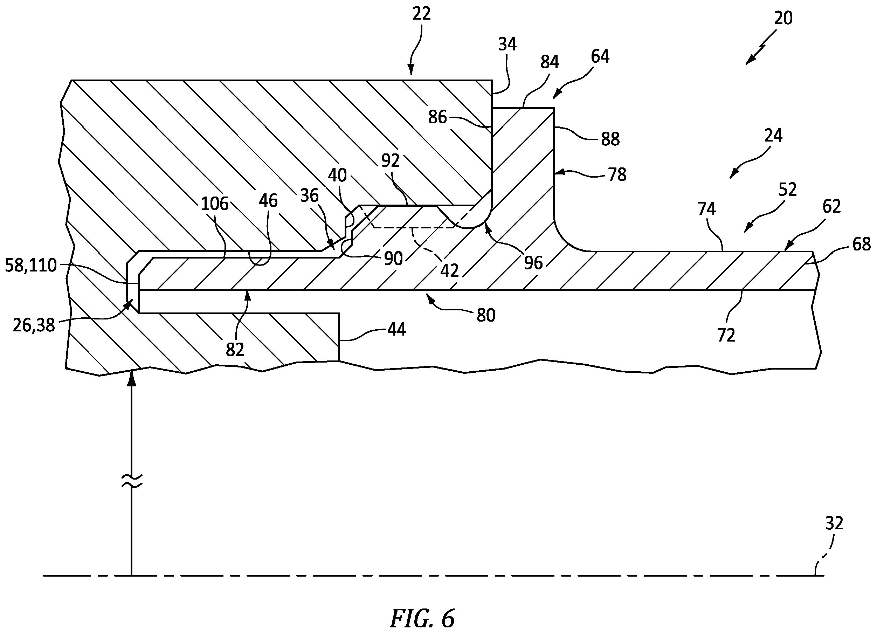

In some embodiments, referring to FIG. 2, the second receptacle aperture 38 may be configured as a bore. In other embodiments, referring to FIG. 6, the second receptacle aperture 38 may be configured as an annular slot. With such an arrangement, the second receptacle aperture 38 may be retrofit into a pre-existing assembly receptacle design; e.g., a design with just the first receptacle aperture 36.

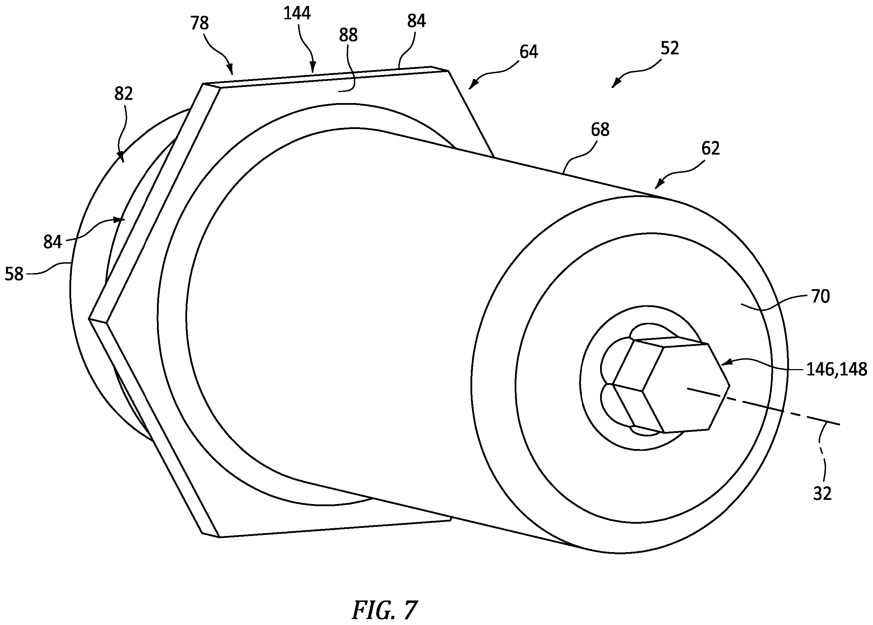

In some embodiments, referring to FIG. 7, the filter housing 52 may be configured with one or more wrenching features 144 and 146 to facilitate installation of the filter housing 52 with the powerplant component 22 (see FIG. 4). The flange distal outer end 84, for example, may be configured with a polygonal (e.g., hexagonal) cross-sectional geometry when viewed, for example, in a reference plane perpendicular to the axis 32. The filter housing 52 may also or alternatively include a protrusion 148 that projects axially out from the housing endwall 70 along the axis 32. This protrusion 148 may be configured with a polygonal (e.g., hexagonal) cross-sectional geometry when viewed, for example, in the reference plane.

In some embodiments, referring to FIG. 4, the fluid filter assembly 24 may be configured with one or more seal elements 150 and 152; e.g., seal rings such a O-rings, etc. The first seal element 150 of FIG. 4 is disposed in the attachment groove 96 and provides a fluid seal between the mount attachment 80 and the powerplant component 22. The second seal element 152 of FIG. 4 is disposed between the element coupler 56 and the powerplant component 22. However, various other seal element arrangements are contemplated. For example, the first seal element 150 may alternatively be disposed axially between the component external side 34 and the flange first side 86.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for a powerplant, comprising:
a fluid filter assembly (24) including a filter housing (52) and a filter element (54) disposed in an internal cavity (66) of the filter housing (52);
the filter housing (52) extending axially along an axis (32) between a housing first end (58) and a housing second end (60), the filter housing (52) including a mount (64) and a sidewall (68), the mount (64) connected to the sidewall (68), and the mount (64) including a flange (78), an attachment (80) and a pilot (82);
the flange (78) projecting radially out from the sidewall (68) and the attachment (80) to a flange distal outer end (84);
the attachment (80) extending axially between the flange (78) and the pilot (82), and the attachment (80) configured with an external threaded section (92); and
the pilot (82) projecting axially out from the attachment (80) to the housing first end (58), the pilot (82) comprising a cylindrical external surface (106) located radially inboard of the external threaded section (92), and an axial length (112) of the pilot (82) greater than an axial length (98) of the attachment (80).

2. The apparatus of claim 1, wherein the axial length (112) of the pilot (82) is equal to or greater than one and one-half times the axial length (98) of the attachment (80).

3. The apparatus of claim 1 or 2, wherein the axial length (112) of the pilot (82) is between one and one-quarter times the axial length (98) of the attachment (80) and two times the axial length (98) of the attachment (80).

4. The apparatus of any of claims 1 to 3, wherein an axial length (114) of the cylindrical external surface (106) is greater than an axial length (100) of the external threaded section (92).

5. The apparatus of any preceding claim, wherein an axial length (120) of the mount (64) is less than a diameter (122) of the internal cavity (66) of the filter housing (52) where the diameter (122) of the internal cavity (66) of the filter housing (52) is measured at a location axially along the mount (64).

6. The apparatus of any preceding claim, wherein an axial length (120) of the mount (64) is less than an axial length (124) of the sidewall (68).

7. The apparatus of any preceding claim, wherein the filter element (54) is disposed completely within the internal cavity (66) of the filter housing (52).

8. The apparatus of any preceding claim, wherein the mount (64) axially overlaps and is spaced radially outboard from the filter element (54).

9. The apparatus of any preceding claim, wherein
the filter housing (52) further includes an endwall (70) connected to the sidewall (68) at the second housing end (60); and
the internal cavity (66) of the filter housing (52) projects axially into the filter housing (52) from the housing first end (58), along the mount (64) and the sidewall (68), to the endwall (70), optionally wherein the filter housing (52) further includes a wrenching feature (144, 146) configured with the endwall (70).

10. The apparatus of any preceding claim, wherein:
the filter housing (52) further includes a wrenching feature (144, 146) configured with the flange (78); and/or
the filter element (54) comprises a tubular filter element (54).

11. The apparatus of any preceding claim, further comprising:
a powerplant component (22) including a first aperture (36), a second aperture (38), an internal threaded section (42) and a cylindrical internal surface (46), the first aperture (36) projecting axially into the powerplant component (22) from a side (34) of the powerplant component (22), along the internal threaded section (42), to the second aperture (38), and the second aperture (38) projecting axially within powerplant component (22) out from the first aperture (36) along the cylindrical internal surface (46);
the flange (78) abutted axially against the side (34) of the powerplant component (22);
the external threaded section (92) mated with the internal threaded section (42) to secure the filter housing (52) to the powerplant component (22); and
the cylindrical internal surface (46) axially overlapping and radially next to the cylindrical external surface (106).

12. The apparatus of claim 11, wherein
the first aperture (36) comprises a counterbore and the second aperture (38) comprises a bore; or
the first aperture (36) comprises a bore and the second aperture (38) comprises an annular slot.

13. The apparatus of claim 11 or 12, wherein
a gap (140) extends radially between the cylindrical internal surface (46) and the cylindrical external surface (106); and either or both of
a ratio of the axial length (112) of the pilot (82) to a radial height (142) of the gap (140) is greater than a ratio of the axial length (98) of the attachment (80) to an internal thread play (V) between the external threaded section (92) and the internal threaded section (42); and/or
a radial height (142) of the gap (140) is less than an internal thread play (V) between the external threaded section (92) and the internal threaded section (42).

14. An apparatus for a powerplant, comprising:
a fluid filter assembly (24) including a filter element (54) and a filter housing (52);
the filter element (54) arranged within an internal cavity (66) of the filter housing (52) and axially recessed from a housing open end (58) along an axis (32);
the filter housing (52) extending axially between the housing open end (58) and a housing closed end (60), the filter housing (52) including a mount (64) and a sidewall (68), the mount (64) connected to the sidewall (68), and the mount (64) including a flange (78), an attachment (80) and a pilot (82);
the flange (78) projecting radially out to a flange distal outer end (84) located radially outboard from the sidewall (68) and the attachment (80);
the attachment (80) extending axially between the flange (78) and the pilot (82), and the attachment (80) configured with an external threaded section (92); and
the pilot (82) projecting axially out from the attachment (80) to the housing open end (58), the pilot (82) comprising a cylindrical external surface (106) located radially inboard of the external threaded section (92).

15. An apparatus for a powerplant, comprising:
a first component (22) extending axially along an axis (32) to a component (22) first end (58), the first component (22) including an internal cavity (66), a mount (64) and a sidewall (68), the internal cavity (66) projecting axially into the first component (22) from the component (22) first end (58), the mount (64) connected to the sidewall (68), and the mount (64) including a flange (78), an attachment (80) and a pilot (82), the flange (78) projecting radially out from the sidewall (68) and the attachment (80) to a flange distal outer end (84), the attachment (80) extending axially between the flange (78) and the pilot (82), the attachment (80) configured with an external threaded section (92), the pilot (82) projecting axially out from the attachment (80) to the component (22) first end (58), and the pilot (82) comprising a cylindrical external surface (106) located radially inboard of the external threaded section (92); and
a second component (22) including a first aperture (36), a second aperture (38), an internal threaded section (42) and a cylindrical internal surface (46), the first aperture (36) projecting axially into the second component (22) from a side (34) of the second component (22), along the internal threaded section (42), to the second aperture (38), and the second aperture (38) projecting axially within the second component (22) out from the first aperture (36) along the cylindrical internal surface (46);
the flange (78) abutted axially against the side (34) of the second component (22), the external threaded section (92) mated with the internal threaded section (42) to attach the first component (22) to the second component (22), the cylindrical internal surface (46) axially overlapping the cylindrical external surface (106), and a gap (140) extending radially between the cylindrical internal surface (46) and the cylindrical external surface (106); and
a ratio of an axial length of the pilot (82) to a radial height (142) of the gap (140) is greater than a ratio of an axial length of the attachment (80) to an internal thread play (V) between the external threaded section (92) and the internal threaded section (42), optionally wherein the first component (22) comprises a fluid filter housing (52).
